# EUROPÄISCHE PATENTSCHRIFT

(11) **EP 1 151 264 B1**
(45) Veröffentlichungstag und Bekanntmachung des Hinweises auf die Patenterteilung: **14.07.2004**
(21) Anmeldenummer: 99956013.9
(22) Anmeldetag: 18.11.1999
(51) Int. Cl.: G01M 3/20

(54) **TESTGASLECKSUCHGERÄT**
TEST GAS LEAKAGE DETECTION APPARATUS
APPAREIL DE RECHERCHE DE FUITES A GAZ TEMOIN

(30) Priorität: 27.01.1999 DE 19903097
(43) Veröffentlichungstag der Anmeldung: 07.11.2001
(73) Patentinhaber: Inficon GmbH, 50968 Köln (DE)
(72) Erfinder: FLOSBACH, Rudolf, D-51688 Wipperfürth (DE)
(74) Vertreter: Leineweber, Jürgen, Dipl.-Phys.
(86) Internationale Anmeldenummer: PCT/EP1999/008858
(87) Internationale Veröffentlichungsnummer: WO 2000/045144

(56) Entgegenhaltungen:
- EP-A- 0 444 434
- WO-A-98/16809
- DE-A- 4 127 543
- GB-A- 1 157 009
- US-A- 4 459 844
- N.G. WILSON: "A MOBILE MULTISTAGE 3000-CFM PUMPING SYSTEM" JOURNAL OF VACUUM SCIENCE AND TECHNOLOGY, Bd. 9, Nr. 1, Februar 1972 (1972-02), Seiten 60-64, XP000878661 NEW YORK (US)

## Beschreibung

Die Erfindung bezieht sich auf ein Testgaslecksuchgerät mit einer Testkammer sowie mit Versorgungs- und Messeinrichtungen, wie Vor- und Hochvakuumpumpen, Testgasdetektor, elektrischen und elektronischen Bauteilen usw.

Aus der internationalen Veröffentlichung WO 98/16 809 ist ein Testgaslecksuchgerät dieser Art bekannt. Es dient der Dichtheitsprüfung von Verpackungen verpackter Gegenstände, seien es Lebensmittel, Pharmazeutika, in der Medizin einsetzbare, nur einmal verwendbare Gegenstände usw. Der Einsatz von Lecksuchgeräten dieser Art erfolgt bei Fertigungslinien. Die Verpackung der dicht verpackten Produkte werden stichprobenartig auf Lecks untersucht.

Als zweckmäßig hat es sich erwiesen, wenn ein Lecksuchgerät der hier betroffenen Art mobil ist, d.h., Ortsveränderungen des gesamten Systems (Testkammer, Versorgungs- und Messeinrichtungen) müssen in einfacher Weise möglich sein. Nach einer Ortsveränderung soll das Lecksuchgerät ohne die Notwendigkeit der Herstellung aufwendiger Verbindungen mit externen Versorgungsgeräten - Ausnahme ist die Stromversorgung - in Betrieb genommen werden können.

Der vorliegenden Erfindung liegt die Aufgabe zugrunde, ein Lecksuchgerät der eingangs erwähnten Art zu schaffen, das die geschilderten Voraussetzungen erfüllt.

Erfindungsgemäß wird diese Aufgabe dadurch gelöst, dass die Testkammer sowie die Versorgungs- und Messeinrichtungen zu einer Baueinheit zusammen gefasst sind, dass sich die Testkammer auf einem Gehäuse abstützt, in dem sämtliche Versorgungs- und Messeinrichtungen untergebracht sind, und dass thermisch kritischen Bestandteilen der Mess- und Versorgungseinrichtungen Luftkühleinrichtungen zugeordnet sind.

Ein Testgaslecksuchgerät mit diesen Merkmalen kann kompakt und mobil - beispielsweise auf Rollen - aufgebaut werden, ohne dass die Gefahr besteht, dass thermisch kritische Bauteile unzulässig hohe Temperaturen annehmen. Infolge der Luftkühleinrichtungen ist das erfindungsgemäße Testgaslecksuchgerät unabhängig von anderen Kühlmitteln.

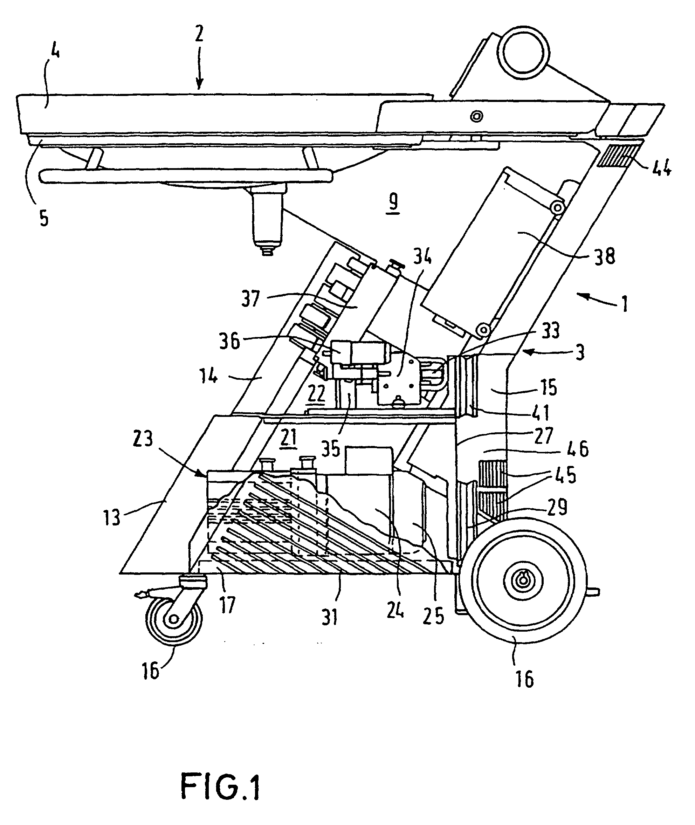

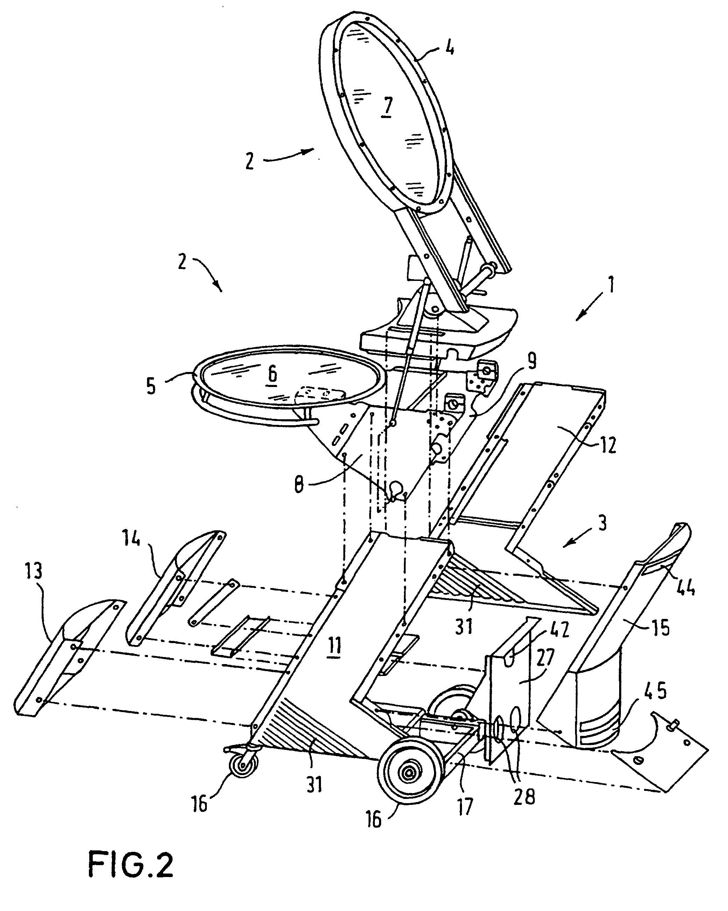

Weitere Vorteile und Einzelheiten der Erfindung sollen anhand von in den Figuren 1 und 2 dargestellten Ausführungsbeispielen erläutert werden. Es zeigen
- Figur 1 einen Vertikalschnitt durch ein Testgaslecksuchgerät nach der Erfindung und
- Figur 2 Testkammer und Gehäuse in Explosiv-Darstellung.

Das in den Figuren 1 und 2 dargestellte Testgaslecksuchgerät 1 umfasst die Testkammer 2 und das Gehäuse 3. Die Testkammer besteht aus zwei Rahmen 4 und 5, in die jeweils eine Folie 6, 7 eingespannt ist (vgl. die eingangs erwähnte Schrift zum Stand der Technik). Die Testkammer 2 stützt sich über Wandabschnitte 8,9 auf dem Gehäuse 3 ab.

Das Gehäuse 3 weist Seitenwandabschnitte 11, 12, Front- und Rückenwandabschnitte 13, 14 bzw. 15 und ein auf Rollen 16 verfahrbares Gestell 17 auf, auf dem sich das Gehäuse 3 und - über das Gehäuse 3 - die Testkammer 2 abstützen.

Figur 1 zeigt, dass sich im Gehäuse 3 eine untere (21) und eine obere Kammer 22 befinden. In der unteren Kammer sind zwei Vorvakuumpumpen 23 (eine ist nicht sichtbar) angeordnet, deren Antriebsmotoren 24 in an sich bekannter Weise mit Lüfterrädern 25 ausgerüstet sind. Die Anordnung der Pumpen 23 in der unteren Kammer 21 ist so gewählt, dass die Lüfterräder 25 einer Zwischenwand 27 zugewandt sind, die sich beim Ausführungsbeispiel vor dem Rückenwandabschnitt 15 befindet. In der Zwischenwand 27 sind jeder der Vorvakuumpumpen 23 zugeordnete Öffnungen 28 (Figur 2) und Lüfter 29 (Figur 1) vorgesehen. Sie liegen koaxial mit den Lüfterrädern 25 der Pumpen 23.

Die von außen angesaugte Kühlluft durchsetzt die Lüfter 29, 25 umströmt die Antriebsmotoren 24 sowie die Pumpenkörper 23 und verlässt den unteren Raum 21 durch in den Seitenwänden 11, 12 befindliche Luftaustrittsschlitze 31.

Durch die Unterbringung der Vorvakuumpumpen 23 in der unteren Kammer 21 des Gehäuses 3 ergibt sich, dass der Schwerpunkt des gesamten Lecksuchgerätes 1 relativ tief liegt. Eine erhöhte Kippsicherheit wird dadurch erreicht.

In der oberen Kammer befinden sich der Testgasdetektor (Massenspektrometer) 33, eine Hochvakuumpumpe (Turbomolekularpumpe) 34, ein Verstärker 35, ein Testleck 36, ein Ventilblock 37 und ein Elektronik-Einschub 38. Ventilblock 37 und Einschub 38 sind oberhalb der übrigen, sich auf dem Boden der Kammer 22 abstützenden Bauteile 33 bis 36 angeordnet.

Die Kühlung der zum Teil thermisch sehr kritischen Bauteile 33 bis 38 erfolgt mit Hilfe eines Lüfters 41, der zunächst einen horizontalen Luftstrom zur Kühlung der im Bodenbereich der Kammer 22 befindlichen Bauteile 33 bis 36 erzeugt. Der Lüfter 41 befindet sich in einer Öffnung 42, die ebenfalls in der Zwischenwand 27 angeordnet ist. Der Luftstrom, der nach dem Umströmen der Bauteile 33 bis 36 nach oben umgelenkt wird, kühlt auf diesem Weg die Bauteile 37 und 38 und verlässt die obere Kammer 22 durch Luftaustrittsschlitze 44, die sich im oberen Bereich der Rückenwand 15 befinden.

Die Rückenwand 15 ist nach außen gewölbt, ist im unteren Bereich mit Lufteintrittsschlitzen 45 versehen und bildet mit der Zwischenwand 27 eine abgeschlossene Lufteintrittskammer 46, über die alle Lüfter 29 und 41 mit Kühlluft versorgt werden. Diese Anordnung hat den Vorteil, dass nur eine Lufteintrittsöffnung (Luftschlitze 45) vorhanden ist und damit Filtereinrichtungen für die Eintrittsluft nur einmal nötig sind.

## Patentansprüche

1. Testgaslecksuchgerät (1) mit einer Testkammer (2) sowie mit Versorgungs- und Messeinrichtungen, wie Vor- und Hochvakuumpumpen, Testgasdetektor, elektronischen Bauteilen usw., **dadurch gekennzeichnet, dass** die Testkammer (2) und die Versorgungs- und Messeinrichtungen zu einer Baueinheit zusammen gefasst sind, dass sich die Testkammer (2) auf einem Gehäuse (3) abstützt, in dem die Versorgungs- und Messeinrichtungen untergebracht sind, und dass thermisch kritischen Bestandteilen der Versorgungs- und Messeinrichtungen Luftkühleinrichtungen zugeordnet sind.

2. Gerät nach Anspruch 1, **dadurch gekennzeichnet, dass** sich im Gehäuse (3) zwei übereinander angeordnete Kammern (21, 22) befinden, denen jeweils eine Luftkühleinrichtung (29 bzw. 41) zugeordnet ist.

3. Gerät nach Anspruch 2, **dadurch gekennzeichnet, dass** sich in der unteren Kammer (21) des Gehäuses (3) mindestens eine Vorvakuumpumpe (23) befindet und dass die der Förderung und Führung der Kühlluft dienenden Einrichtungen (Lüfter 29, Luftdurchtrittsöffnungen 45, 28, 31 im Gehäuse 3) derart angeordnet sind, dass die Kühlluft im wesentlichen in horizontaler Richtung strömt.

4. Gerät nach Anspruch 3, **dadurch gekennzeichnet, dass** die Vorvakuumpumpe (23) mit einem Lüfter (25) ausgerüstet ist und dass die Strömungsrichtungen der vom Lüfter (25) der Vakuumpumpe (23) und der vom im Gehäuse (3) untergebrachten Lüfter (29) erzeugten Kühllufströme gleichgerichtet sind.

5. Gerät nach Anspruch 3 oder 4, **dadurch gekennzeichnet, dass** Lufteintrittsöffnungen (44, 45) in der Rückwand (15) und Luftaustrittsöffnungen (31) in den Seitenwänden (11, 12) des Gehäuses (3) angeordnet sind.

6. Gerät nach einem der Ansprüche 2 bis 5, **dadurch gekennzeichnet, dass** sich in der oberen Kammer (22) des Gehäuses (3) weitere Versorgungs- und Messeinrichtungen (33 bis 38) befinden und dass die dieser Kammer zugeordneten Luftkühleinrichtungen (41) derart ausgebildet sind, dass die Kühlluft die obere Kammer (22) in ihrem unteren Bereich horizontal durchströmt und danach nach oben abgelenkt wird.

7. Gerät nach Anspruch 6, **dadurch gekennzeichnet, dass** im Bereich der horizontalen Luftströmung eine Hochvakuumpumpe (34), ein Testgasdetektor (33) und ein Verstärker (35) angeordnet sind.

8. Gerät nach Anspruch 6 oder 7, **dadurch gekennzeichnet, dass** sich im nach oben gerichteten Luftstrom eine Elektronikeinheit (38) befindet.

9. Gerät nach einem der Ansprüche 6, 7 oder 8, **dadurch gekennzeichnet, dass** Lufteintritts- und Austrittsöffnungen (44 bzw. 45) für die die obere Kammer (22) durchsetzende Kühlluft in der Rückwand (15) des Gehäuses (3) angeordnet sind.

10. Gerät nach einem der Ansprüche 2 und 9, **dadurch gekennzeichnet, dass** eine gemeinsame Lufteintrittsöffnung (45) für die beide Kammern (21, 22) durchströmenden Luftströme in der Rückwand des Gehäuses (3) angeordnet sind.

11. Gerät nach Anspruch 10, **dadurch gekennzeichnet, dass** die Rückenwand (15) nach außen gewölbt ist und dass sie mit einer Zwischenwand 27), die mit Öffnungen (28, 42) und Lüftern (29, 41) ausgerüstet ist, eine gemeinsame Lufteintrittskammer (46) bildet.

## Claims

1. Test gas leakage detection apparatus (1) with a test chamber (2) and with supply and measuring devices such as forepumps and high-vacuum pumps, test gas detector, electronic components, etc., **characterised in that** the test chamber (2) and the supply and measuring devices are combined to form a construction unit, that the test chamber (2) is supported on a housing (3) in which the supply and measuring devices are accommodated, and that air cooling devices are associated with thermally critical components of the supply and measuring devices.

2. Apparatus according to Claim 1, **characterised in that** two superimposed chambers (21, 22) are located in the housing (3), with which chambers an air cooling device (29 and 41, respectively) is in each case associated.

3. Apparatus according to Claim 2, **characterised in that** at least one forepump (23) is located in the lower chamber (21) of the housing (3), and that the devices (fan 29, air penetration openings 45, 28, 31 in the housing 3) serving to deliver and guide the cooling air are arranged such that the cooling air flows substantially in the horizontal direction.

4. Apparatus according to Claim 3, **characterised in that** the forepump (23) is equipped with a fan (25), and that the directions of flow of the cooling air streams produced by the fan (25) of the vacuum pump (23) and the fan (29) accommodated in the housing (3) are equidirectional.

5. Apparatus according to Claim 3 or 4, **characterised in that** air penetration openings (44, 45) are arranged in the rear wall (15) and air penetration openings (31) in the side walls (11, 12) of the housing (3).

6. Apparatus according to any one of Claims 2 to 5, **characterised in that** further supply and measuring devices (33 to 38) are located in the upper chamber (22) of the housing (3), and that the air cooling devices (41) associated with this chamber are formed such that the cooling air flows horizontally through the upper chamber (22) in its lower area and afterwards is deflected upwards.

7. Apparatus according to Claim 6, **characterised in that** a high-vacuum pump (34), a test gas detector (33) and an amplifier (35) are arranged in the area of the horizontal air stream.

8. Apparatus according to Claim 6 or 7, **characterised in that** an electronic unit (38) is located in the upward directed air stream.

9. Apparatus according to any one of Claims 6, 7 or 8, **characterised in that** air entry and exit openings (44 and 45, respectively) for the cooling air passing through the upper chamber (22) are arranged in the rear wall (15) of the housing (3).

10. Apparatus according to either of Claims 2 and 9, **characterised in that** a common air entry opening (45) for air streams flowing through the two chambers (21, 22) are arranged in the rear wall of the housing (3).

11. Apparatus according to Claim 10, **characterised in that** the rear wall (15) is curved outwards, and that, together with an intermediate wall (27), which is equipped with openings (28, 42) and fans (29, 41), it forms a common air entry chamber (46).

## Revendications

1. Appareil de recherche de fuites à gaz d'essai (1) comprenant une chambre d'essai (2) ainsi que des dispositifs d'alimentation et de mesure de type pompes à vide primaires et pompes à vide secondaires, détecteur de gaz d'essai, composants électroniques, etc. **caractérisé en ce que** la chambre d'essai (2) et les dispositifs d'alimentation et de mesure sont regroupés en un module, **en ce que** la chambre d'essai (2) s'appuie sur un boîtier (3) dans lequel sont logés les dispositifs d'alimentation et de mesure et **en ce que** des dispositifs de refroidissement à air sont associés à des composants des dispositifs d'alimentation et de mesure critiques sur le plan thermique.

2. Appareil selon la revendication 1 **caractérisé en ce que** deux chambres (21, 22) disposées l'une au-dessus de l'autre auxquelles est associé à chaque fois un dispositif de refroidissement à air (29 ou 41) se trouvent dans le boîtier (3).

3. Appareil selon la revendication 2 **caractérisé en ce qu'**au moins une pompe à vide primaire (23) se trouve dans la chambre inférieure (21) du boîtier (3) et **en ce que** les dispositifs servant au transport et au guidage de l'air de refroidissement (ventilateur 29, orifices d'admission d'air 45, 28, 31 dans le boîtier 3) sont disposés de manière à ce que l'air de refroidissement s'écoule essentiellement dans la direction horizontale.

4. Appareil selon la revendication 3 **caractérisé en ce que** la pompe à vide primaire (23) est dotée d'un ventilateur (25) et **en ce que** les directions d'écoulement des courants d'air de refroidissement générés par le ventilateur (25) de la pompe à vide (23) et du ventilateur (29) logé dans le boîtier (3) sont dirigées de la même manière.

5. Appareil selon la revendication 3 ou 4 **caractérisé en ce que** des orifices d'admission d'air (44, 45) sont disposés dans la paroi arrière (15) et des orifices d'évacuation d'air (31) dans les parois latérales (11, 12) du boîtier (3).

6. Appareil selon l'une quelconque des revendications 2 à 5 **caractérisé en ce que** d'autres dispositifs d'alimentation et de mesure (33 à 38) se trouvent dans la chambre supérieure (22) du boîtier (3) et **en ce que** les dispositifs de refroidissement à air (41) associés à cette chambre sont conçus de manière à ce que l'air de refroidissement traverse horizontalement la chambre supérieure (22) dans sa partie inférieure avant d'être dévié vers le haut.

7. Appareil selon la revendication 6 **caractérisé en ce qu'**une pompe à vide secondaire (34), un détecteur de gaz d'essai (33) et un amplificateur (35) sont disposés dans la zone du courant d'air horizontal traversant.

8. Appareil selon la revendication 6 ou 7 **caractérisé en ce qu'**une unité électronique (38) se trouve dans le courant d'air orienté vers le haut.

9. Appareil selon l'une quelconque des revendications 6, 7 et 8 **caractérisé en ce que** des orifices d'admission ou d'évacuation de l'air (44 et/ou 45) sont disposés dans la paroi arrière (15) du boîtier (3) pour l'air de refroidissement traversant la chambre supérieure (22).

10. Appareil selon l'une quelconque des revendications 2 et 9 **caractérisé en ce que** des courants d'air traversant un orifice d'admission d'air (45) commun aux deux chambres (21, 22) sont disposés dans la paroi arrière du boîtier (3).

11. Appareil selon la revendication 10 **caractérisé en ce que** la paroi arrière (15) est bombée vers l'extérieur et **en ce qu'**elle forme une chambre d'admission d'air commune (46) avec une paroi intermédiaire (27) qui est dotée d'orifices (28, 42) et de ventilateurs (29, 41).
